# EUROPEAN PATENT APPLICATION

(11) **EP 3 871 835 A1**
(43) Date of publication of application: **01.09.2021**
(21) Application number: 21152400.4
(22) Date of filing: 19.01.2021
(51) Int. Cl.: B24B 49/14, B24B 49/16, B24B 51/00, B24B 49/00, B24B 1/00, B24B 7/24, B24B 27/00, B23Q 7/04, B24B 27/033

(54) **METHODS AND EQUIPMENT FOR SURFACE SCRATCH REPAIR**

(30) Priority: 26.02.2020 CN 202010119484
(71) Applicant: Shanghai Dong-Jing Automatic system Co., Ltd., Shanghai (CN); Tung Hing Automation Investment Limited, Kowloon, Hong Kong (HK)
(72) Inventor: CHEN, Yong Qiang, Kowloon (HK); LIM, Long Hei, Kowloon (HK)
(74) Representative: Cabinet Chaillot

(57) **Abstract**

The invention relates to a method and a device for repairing scratches on strengthened glass surface. The method comprises the following steps: (1) polishing the substrate surface with abrasive without the presence of polishing liquid, wherein the polishing treatment is carried out under the condition that the contact pressure between the abrasive and the substrate surface is 0.8-4N and the substrate surface temperature is less than 40°C; (2) The substrate surface after step (1) is processed with mirror treatment with abrasive without the presence of polishing liquid, wherein the polishing is carried out under a pressure of 0.4-2N contact pressure between the abrasive and the substrate, and a temperature of the substrate surface less than 25°C. The method and equipment can effectively remove or reduce the scratch on the strengthened glass surface of electronic products without dismantling the machine, restore the smoothness of the glass, and achieve the mirror effect.

## Description

### FIELD OF INVENTION

The invention relates to a method and equipment for surface scratch repair, in particular to a digital polishing method and equipment for surface scratch repair of reinforced glass.

### BACKGROUND

At present, the surface of daily electronic products (including most brands of mobile phones, tablet computers and smart watches) is usually covered with reinforced glass. In use, the reinforced glass often has scratches. There is a need for the surface treatment, surface polishing and / or scratch repair of such reinforced glass with scratches.

In the prior art, the polishing method for the mobile phone panel glass includes polishing the glass material by using the mechanical and chemical actions between the polishing abrasive and the surface of the mobile phone panel glass; the polishing abrasive can usually be a polishing fluid or a polishing powder. However, this polishing method requires the use of liquid (when using polishing powder) or polishing fluid in the process of processing and will produce a lot of dust. As these liquids and dust will damage the internal circuit of electronic products, they are not suitable for the glass processing of electronic products. Especially when the strengthened glass is not allowed to be disassembled and separated from the display screen and electronic circuit after assembly, or it is extremely difficult to separate, or the separation will cause damage to the display screen and circuit or greatly reduce the performance index, the existing polishing methods and equipment cannot meet the use requirements.

Therefore, a new method and equipment for surface scratch repair is needed. The method and equipment can effectively remove or reduce the scratch on the glass surface of electronic products and restore the smoothness and brightness of the glass (mirror effect).

### SUMMARY OF INVENTION

The object of the embodiment of the invention is to solve the above and other deficiencies existing in the prior art. The technical problem to be solved by the invention lies in that in order to overcome the polishing method which is not applicable to the whole machine of electronic products in the prior art, the method does not need to disassemble the electronic products, does not need to worry about the loss of electronic products' files, and does not need polishing fluid, only needs a small amount of water mist, and does not generate large amount of dust; moreover, in the scratch repair process of the invention, the temperature of electronic products will not exceed the required temperature limit, the glass will not crack or damage the internal circuit board of electronic products.

In order to solve the problems existing in the prior art, the invention provides a surface scratch repair method, the method includes:
(1) an abrasive is used to polish a substrate surface without the presence of a polishing liquid, wherein a polishing treatment is carried out under the condition that the contact pressure between the abrasive and the substrate surface is 0.8-4N and the substrate surface temperature is less than 40°C;
(2) the substrate surface after step (1) is processed with mirror treatment with abrasive without the presence of polishing fluid, wherein the polishing is carried out under a pressure of 0.4-2N contact pressure between the abrasive and the substrate, and a temperature of the substrate surface less than 25 °C.

In the embodiment of the invention, the abrasive in step (1) is selected from diamond, silicon carbide or a combination of them.

In the embodiment of the invention, the abrasive in step (2) includes cerium oxide.

In the embodiment of the invention, in step (1), the particle size of the abrasive is 18-40µm.

In the embodiment of the invention, in step (2), the structure of the abrasive is pyramidal.

In the embodiment of the invention, the abrasive is polished or polished in a forward-reverse symmetrical manner.

In the embodiment of the invention, the polishing treatment in step (1) is carried out at the grinding wheel speed of 3000-4000 rpm; in step (2), the mirror treatment is carried out at the grinding wheel speed of 800-2500 rpm.

On the other hand, the invention also provides a surface scratch repair apparatus, the apparatus includes:
(a) a pressure measuring device for measuring the contact pressure between abrasive and glass;
(b) a precise control device for pressure increase and decrease;
(c) a speed control device of grinding plate;
(d) a surface temperature measuring device;
(e) an accurate control device of surface temperature;
(f) a precise control device of grinding disk path;
(g) a precise control device of contact point (surface) consistency between grinding plate and glass surface.

In the embodiment of the invention, based on the pressure measured by the pressure measuring device, the precision control device for pressure increase and decrease controls the pressure of polishing treatment in step (1) to 0.8-4N, and the pressure of mirror treatment in step (2) is controlled at 0.4-2N.

In the embodiment of the invention, based on the temperature measured by the temperature measuring device, the precision control device of the surface temperature controls the temperature of the polished substrate surface in step (1) to be less than 40°C; and the temperature of the substrate surface processed with mirror treatment in step (2) is controlled to be less than 25 °C.

In the embodiment of the invention, if there are still surface scratches after steps (1) and (2), steps (1) and (2) can be repeated again, only the number of grinding at the same position in each step (1) and step (2) need to be reduced.

In the invention, the surface scratch repair method and equipment can effectively remove or reduce the scratch on the glass surface of the electronic product without disassembling the electronic product and restore the glass surface to be smooth without worrying about data loss. Moreover, in the process of removing scratches on the glass of electronic products, it can ensure that the electronic products are not damaged. Since the polishing process is carried out without the presence of polishing liquid, there is no possibility of water entering into the electronic products. Moreover, the surface scratch repair method of the invention will not produce a large amount of dust, so it will not enter or pollute the internal electronic circuit board. In addition, the temperature in the polishing process will not exceed 40°C, which means the glass will not be cracked or damage the internal circuit board of the product.

Other features and aspects will become clear from the following detailed description, drawings and claims.

### BRIEF DESCRIPTION OF DRAWINGS

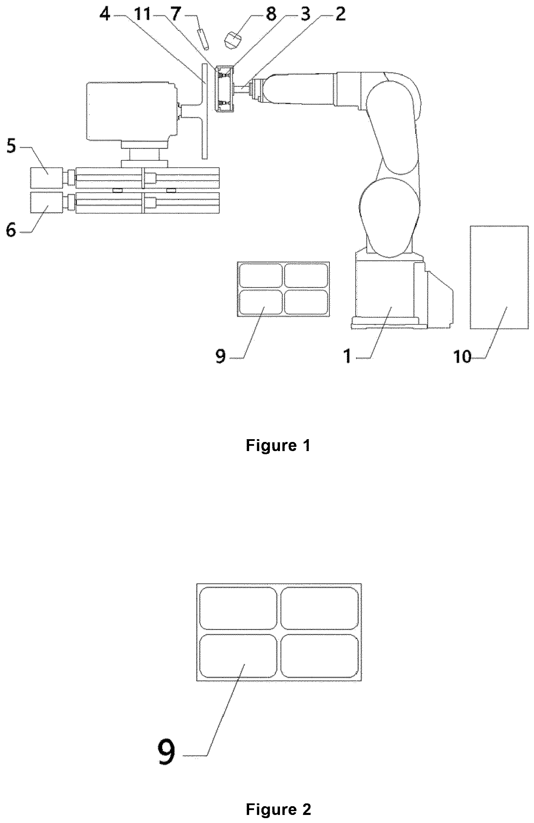

The invention can be better understood by describing exemplary embodiments of the invention in combination with the accompanying drawings
Fig. 1 is the overall schematic diagram of the surface scratch repair equipment in a specific embodiment of the invention.
Fig. 2 is a schematic diagram of a local device (mobile phone fixture box 9) of the surface scratch repair apparatus in a specific embodiment of the invention.

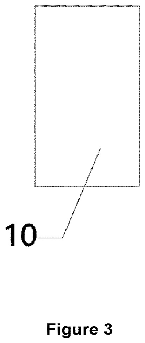

Fig. 3 is a schematic diagram of a local device (main control device 10) of the surface scratch repair apparatus according to a specific embodiment of the present invention.

Among them,
Mark 1: mechanical arm
Mark 2: manipulator gripper
Mark 3: vacuum sucker
Mark 4: grinding plate
Mark 5: pressure detection device
Mark 6: pressure increase and decrease control device
Mark 7: temperature detection device
Mark 8: spray device
Mark 9: fixture box
Mark 10: master control; and
Mark 11: Electronic products to be repaired

### DETAILED DESCRIPTION OF PREFERRED EMBODIMENTS

Unless otherwise defined, the technical terms or scientific terms used in the claims and the description shall have the general meaning understood by persons with general skills in the technical field to which the invention belongs.

In this context, the term "approximately" used to modify, for example, the amount, concentration, temperature, pressure, rotational speed and similar values and their ranges of abrasives, or the scale and similar values and ranges of components, refers to changes in numerical quantities that may occur, for example, from conventional measurements and operating processes used to prepared materials, temperatures, pressures, thicknesses, sizes, or use of formulations; Accidental errors in these processes; differences in purity or composition of the manufacturing, source, or original material used to implement the method; and similar factors.

In this paper, when a numerical range such as 5-25 is given, it means at least 5 or not less than 5 and not more than or less than 25 separately and independently. In some embodiments, this range may be independently limited to not less than 5, and separately and independently not more than 25. Values with such a range, such as 10-15, or 10-20, also include the lower and upper limits of the range separately and independently in the same manner.

In the present invention, similar terms such as "including" or "containing" mean that the element or object appearing before "including" or "containing" covers the element or article listed after "including" or "containing" and its equivalent and does not exclude other elements or objects.

The present invention is further described in combination with specific embodiments, but the present invention is not limited to the following specific embodiments.

The surface scratch repair method of the invention includes: (1) polishing the substrate surface with abrasive without the presence of polishing fluid, wherein the abrasive particle size is 18-40 µm. In the present invention, the term "polishing fluid" refers to a liquid formed by uniformly and freely distributing the abrasive in a dispersion (e.g., water). Without the presence of polishing fluid, the surface repair method of the invention will not lead to the possibility of water entering into the electronic products.

The surface scratch repair method of the invention includes: (2) polishing the substrate surface after step (1) with abrasive without the presence of polishing fluid, wherein the abrasive structure is pyramid structure. In the invention, the pyramid structure is an abrasive product structure, which is pyramid shaped, and is often used for repairing and polishing scratches on the surface of glass / LCD liquid crystal panel. This three-dimensional structure is the same size of abrasive particles through the adhesive bonding, molded into a pyramid. The pyramid row can improve the self-sharpening and consistency of the disc containing abrasive particles.

In some specific embodiments, the particle size of the abrasive is 18-40µm, 18-35µm, 18-30µm, 18-25µm, 18-22µm, 22-40µm, 22-35µm, 22-30µm, 22-25µm, 25-40µm, 25-35µm, 25-30µm, 30-40µm, 30-35µm, 35-40µm and any value in any range above. In the embodiment of the invention, the abrasive material in step (1) is diamond or silicon carbide. In the invention, the abrasive in step (1) includes ABRALON J3500 and ABRALON J3600 (made of silicon carbide) purchased from Mirka company, and TD3 (made of diamond) purchased from 3M company.

In the embodiment of the invention, the abrasive material cerium oxide in step (2) is described. In the invention, the abrasive in the step (2) includes 568XA (made of cerium oxide) purchased from 3M company.

In the embodiment of the invention, the polishing treatment in step (1) is carried out under a pressure of 0.8-4N. In some specific embodiments, the pressure of the step (1) in the step (1) is 0.8-3N, 0.8-2.7N, 0.8-2.4N, 0.8-2N, 0.8-1.7N, 0.8-1.4N, 0.8-1N, 1-3N, 1-2.7N, 1-2.4N, 1-2N, 1-1.7N, 1-1.4N, 1.4-3N, 1.4-2.7N, 1.4-2.4N, 1.4-2N, 1.4-1.7N, 1.7-3N, 1.7-2.7N, 1.7-2.4N, 1.7-2N, 2-3N, 2-2.7N, 2-2.4N, 2.4-3N, 2.4-2.7N,2.7-3N and any of them Meaning value. In the invention, the size of the pressure setting value is the key condition process. If the pressure is too high (e.g., greater than 3N), the glass surface of electronic products will crack or crack, or excessive heat will be generated during rough polishing / mirror treatment process, which will lead to the temperature rise of glass surface, which will cause damage to the screen and / or internal circuit of electronic products. On the other hand, if the pressure is too low (e.g., less than 0.8N), it will make the scratch difficult to remove or take too much time, which will affect the coarse polishing / mirror treatment efficiency.

In the embodiment of the invention, in the polishing treatment in step (1), the temperature of the substrate surface is less than 40 °C. In some specific embodiments, the glass surface temperature in step (1) is controlled at less than 40°C, less than 38°C, less than 35°C, less than 30°C or less than 27°C. In practice, if the temperature of glass surface exceeds 40°C, it is easy to damage the screen or internal circuit of electronic products.

In the embodiment of the invention, the polishing treatment in step (2) is carried out under a pressure of 0.4-2N. In some specific embodiments, the pressure when the grinding plate for the mirror polishing process contacts the glass surface is 0.4-2N, 0.4-1.7N, 0.4-1.4N, 0.4-1N, 0.4-0.7N, 0.7-2N, 0.7-1.7N, 0.7-1.4N, 0.7-1N, 1-2N, 1-1.7N, 1-1.4N, 1.4-2N, 1-1.7N, 1.7-2N and any value between them. In the invention, the size of the pressure setting value is the key condition of process. If the pressure is too high (e.g., greater than 2n), the glass surface of electronic products will crack, or excessive heat will be generated in the process of rough polishing / mirror treatment, which will lead to the temperature rise of glass surface, which will cause damage to the screen and / or internal circuit of electronic products. On the other hand, if the pressure is too low (e.g., less than 0.4N), it will make the scratch difficult to remove or take too much time, which will affect the coarse polishing / mirror treatment efficiency.

In the embodiment of the invention, in the polishing treatment in step (2), the temperature of the substrate surface is less than 25°C. In the whole process, the glass surface temperature should be controlled below 30°C, 28°C, 25°C, 20°C or 18°C.

In the embodiment of the invention, the temperature of the substrate surface is controlled by controlling the amount of spray or the spray time. Normally, the surface temperature of the substrate does not exceed the required temperature control conditions at a contact pressure set by the method described in the invention. However, when the substrate surface temperature exceeds, a small amount of spray (e.g. water spray) on the surface of the processed substrate can reduce its surface temperature.

Similarly, the invention also controls the surface temperature of the substrate by reducing the contact pressure between the abrasive and the substrate. But when the substrate surface temperature exceeds, the contact pressure between the abrasive and the substrate can be reduced, and the heat generated by friction will be reduced to less than the heat dissipated, thus reducing the substrate surface temperature.

In the embodiment of the invention, the abrasive is polished in a forward reverse symmetrical manner. In this way, in the embodiment of the invention, even the deeper scratches on the substrate surface can be further removed.

In the embodiment of the invention, if there are still surface scratches after steps (1) and (2), steps (1) and (2) can be repeated again, only the number of grinding at the same position in each step (1) and step (2) need to be reduced.

In the invention, the method for repairing scratch on the surface of reinforced glass comprises:
(1) Rough polishing (grinding) process:
   The rough polishing (grinding) process can effectively remove the scratches with different depths on the surface of the strengthened glass. The available abrasive material can be diamond or silicon carbide, and the abrasive particle size is usually 18-40 microns. In the coarse polishing process of the invention, the abrasive with the particle size greater than 40µm will produce new deep grinding marks while removing the original scratches, greatly increasing the polishing time and reducing the efficiency. However, the abrasive with particle size less than 18 will greatly increase the time required to remove scratches, even cannot effectively remove scratches. Through the inventor's unremitting research and experimental analysis and comparison, the abrasive with particle size of 18-40 can effectively remove the scratches of different depths on the surface of the strengthened glass, and will not produce deep grinding marks, and the polishing time can be greatly shortened. Generally, abrasive materials used in rough polishing process include but are not limited to ABRALON J3500 and ABRALON J3600 purchased from Mirka company and TD3 (diamond material) purchased from 3M company.
(2) Mirror treatment (fine grinding) process:
   The mirror treatment (fine grinding) process can effectively remove the grinding mark that must be generated after the rough polishing (grinding) process, so as to achieve the effect of strengthening the specular effect on the glass surface, that is, achieving the same effect as the surface of the newly strengthened glass.

The available abrasive material can be ceria, and the structure of the abrasive is pyramid type. The material with this structure can eliminate the grinding marks evenly and achieve the mirror effect, and the number of grinding times can reach 10-30 times. The specific grinding life-time are related to the grinding pressure and the number and depth of the grinding marks; however, the abrasive materials without this structure will greatly increase the time required to remove the grinding marks, and even cannot effectively remove the grinding marks. Through the inventor's unremitting research and experimental comparative analysis, in the range of 5-10 grinding times, the abrasive can effectively remove the grinding marks produced by rough polishing (grinding) process on the surface of reinforced glass. Generally, the abrasives used in the mirror treatment polishing process include but are not limited to 568XA (cerium oxide) purchased from 3M Co., Ltd. In general, a piece of abrasive can polish three workpieces (mobile phone screen), but the grinding time of front and rear workpiece is slightly different, the grinding time of the first workpiece is the shortest, and the grinding time of subsequent workpiece needs to be increased.

In the specific embodiment of the invention, the rough polishing (grinding) process can be carried out under one or more of the following conditions:
(1) Abrasive selection: ABRALON J3500 or ABRALON J3600 (silicon carbide) or other materials shall be used
(2) Abrasive form: disc, diameter greater than 6 inches, disc speed of 3000-4000 rpm
(3) Rough polishing pressure: 0.8-4N when the grinding plate contacts the glass surface
(4) Rough casting time: 1-3 minutes
(5) The grinding times of the grinding disc at the same position: 3-10 times, depending on the depth of the scratch. For general scratches (no more than 0.2 mm), under the above pressure control conditions, 5 times of grinding can effectively remove the scratches.

In the specific embodiment of the invention, the rough polishing (grinding) process can be carried out under one or more of the following conditions:
(1) Abrasive selection: use TD3 (material is diamond)
(2) Abrasive form: disc, diameter of 5 inches, disc speed of 800-2500 rpm
(3) Rough polishing pressure: the pressure when the grinding plate contacts with the glass surface is 0.8-3N
(4) Rough casting time: 1-3 minutes; and
(5) The grinding times of grinding disc at the same position: 10-80 times, which is determined according to the scratch depth. For general scratches (no more than 0.2mm), under the above pressure control conditions, 20 times of grinding can effectively remove the scratches.

In the coarse polishing process of the invention, the friction between the abrasive and the glass surface will produce thermal effect, and the glass surface will be heated. Therefore, in the whole rough polishing process, the glass surface temperature should be controlled at less than 40 °C, preferably less than 35 °C. A non-contact temperature measuring system (infrared thermometer) is used to measure the temperature on the surface of the glass, and temperature control is carried out based on the measured temperature through the control of water spray quantity and time. Of course, the heat generated by the friction can be reduced by changing the pressure setting value, but it will reduce the grinding efficiency and increase the grinding time.

In the invention, the mirror treatment process can be carried out under one or more of the following conditions:
(1) Selection of abrasive: 568XA (material is ceria)
(2) Abrasive form: disc, diameter of 5 inches, disc speed of 1000-2000 rpm
(3) The pressure of mirror treatment: the pressure when the grinding plate contacts the glass surface is 0.4-2N
(4) Mirror treatment time: 1-3 minutes; and
(5) Grinding times of grinding disc at the same position: 1-5 times.

In the mirror treatment polishing process of the present invention, the friction and chemical reaction (cerium oxide and reinforced glass) between abrasives (for example, ceria) and glass surface will produce thermal effect, so that the glass surface is heated. Therefore, in the whole mirror process, the temperature of glass surface is controlled at less than 30°C, preferably less than 25°C, more preferably 25 °C . A non-contact temperature measuring system (infrared thermometer) is used to measure the temperature on the surface of the glass, and temperature control is carried out based on the measured temperature through the control of water spray quantity and time. Of course, the heat generated by the friction can be reduced by changing the pressure setting value, but it will reduce the grinding efficiency and increase the grinding time. Through a large number of experiments, analysis and comparison of the inventors, it is found that when the temperature of glass surface is controlled at 25 °C, the specular effect on the surface of reinforced glass is the best.

In the present invention, an apparatus for surface scratch repair includes one or more of the following devices:
(1) A pressure measuring device for measuring contact pressure between grinding disc and glass surface
(2) Precise control device for pressure increase and decrease
(3) The speed control device of grinding plate
(4) Temperature measuring device for glass surface
(5) Precise temperature control device
(6) Precise control of the path of the grinding disc; and
(7) Precise control device of contact point (surface) consistency between grinding plate and glass surface.

In the present invention, the pressure measuring device 5 can be used for real-time detecting the pressure between the grinding plate and the glass surface during the high-speed rotation of the grinding plate in the process of rough polishing / mirror treatment, so as to be the target pressure value / reference value for the pressure control in the process of rough polishing / mirror treatment. In the invention, the pressure measuring device 5 adopts the technology of another invention patent (Patent No. CN106553126b) obtained by the inventor, can also include but not limited to, such as the multi axial force / torque detector, etc., but changes according to the parameters listed in the invention.

According to the real-time pressure detection signal provided by the pressure measuring device 5, the precise control device 6 for pressure increase or decrease increases or decreases the pressure when the grinding plate contacts the glass surface. In some embodiments, the precise control device 6 for pressure increase or decrease increases or decreases the pressure when the grinding disc contacts the glass surface according to the difference between the real-time pressure detection signal provided by the pressure measuring device 5 and the pressure setting value in the coarse polishing / mirror treatment process. Through the precise control of the pressure in the process of rough polishing / mirror treatment, the coarse polishing / mirror treatment effect required by the glass surface can be ensured.

In some specific embodiments, the pressure when the grinding disc for the rough polishing process is in contact with the glass surface is 0.8-3N, 0.8-2.7N, 0.8-2.4N, 0.8-2N, 0.8-1.7N, 0.8-1.4N, 0.8-1N, 1-3N, 1-2.7N, 1-2.4N, 1-2N, 1-1.7N, 1-1.4N, 1.4-3N, 1.4-2.7N, 1.4-2.4N, 1.4-2N, 1.4-1.7N, 1.7-3N, 1.7-2.7N, 1.7-2.4N, 1.7-2N, 2-3N, 2-2.7N, 2-2.4N, 2.4-3N, 2.4-2.7N, 2.7-3N and any value between them. In the invention, the size of the pressure setting value is the key condition of process. If the pressure is too high (e.g., greater than 3N), the glass surface of electronic products will crack or crack, or excessive heat will be generated during rough polishing / mirror treatment process, which will lead to the temperature rise of glass surface, which will cause damage to the screen and / or internal circuit of electronic products. On the other hand, if the pressure is too low (for example, less than 0.8N), the scratch will be difficult to remove, or it will take too much time, which will affect the rough polishing efficiency.

In some specific embodiments, the pressure when the grinding plate for the mirror polishing process contacts the glass surface is 0.4-2N, 0.4-1.7N, 0.4-1.4N, 0.4-1N, 0.4-0.7N, 0.7-2N, 0.7-1.7N, 0.7-1.4N, 0.7-1N, 1-2N, 1-1.7N, 1-1.4N, 1.4-2N, 1-1.7N, 1.7-2N and any value between them. In the invention, the size of the pressure setting value is the key condition process. If the pressure is too high (e.g., greater than 2N), the glass surface of electronic products will crack or crack, or excessive heat will be generated in the process of mirror treatment, which will lead to the temperature rise of glass surface, which will cause damage to the screen and / or internal circuit of electronic products. On the other hand, if the pressure is too low (e.g., less than 0.4N), it will make it difficult to remove the grinding marks generated by the rough polishing process, or it will take too much time, which will affect the polishing / mirror treatment efficiency.

In the present invention, the control device of the grinding disc speed can be realized by servo or frequency conversion motor. The speed of grinding disc can be stepless adjusted, and the positive and negative directions can be changed. In some specific embodiments, in the actual rough polishing / mirror polishing process, the grinding disc can be operated in a forward-reverse symmetrical manner to speed up the disappear of polishing marks.

In some specific embodiments, the disc speed for the rough polishing process is 3000-4000 rpm, 3000-3800rpm, 3000-3300rpm, 3200-4000rpm, 3200-3800rpm, 3200-3500rpm, 3500-4000rpm, 3500-3800rpm, 3800-4000rpm and any value between them. In some specific embodiments, the speed of the grinding disc for the mirror treatment process is 1000-2000 rpm, 1000-1800rpm, 1000-1600rpm, 1000-1400rpm, 1000-1200rpm, 1200-2000rpm, 1200-1800rpm, 1200-1600rpm, 1200-1400rpm, 1400-2000rpm, 1400-1800rpm, 1400-1600rpm, 1600-2000rpm, 1600-1800rpm, 1800-2000rpm and any value between them.

In the invention, the temperature measuring device 7 of the glass surface can detect the temperature change value of the glass surface in the process of rough polishing / mirror treatment in real time. In the present invention, the temperature measuring device 7 includes but is not limited to gas thermometer, electrical resistance thermometer, thermo-electric thermometer, dial thermometer, glass thermometer, pressure thermometer, infrared thermometer, rotary thermometer, semiconductor thermometer, thermocouple thermometer, etc. In the invention, the surface of the whole electronic product is required to be rough polished / mirror treatment process, and it is not necessary to disassemble any electronic components. Therefore, the heat generated in the process of rough polishing / mirror treatment needs to be strictly controlled to avoid heat conduction to the screen and internal circuit, because excessive temperature will cause certain damage to the screen or internal circuit.

In the invention, the precise temperature control device usually includes, but is not limited to, a spray device, a blowing device, etc., for spraying and blowing on the grinding plate or glass surface during polishing. In some embodiments, the operation of the precise temperature control device can be performed according to the real-time temperature change value provided by the temperature measuring device 7. In other embodiments, the operation of the precise temperature control device (5) can be performed automatically when a process is started. In the invention, the spray device can cool the glass surface according to the temperature change value provided by the temperature measuring device 7 in real time, on the other hand, the spraying device can play the role of dust suppression in the rough polishing / mirror treatment process. Finally, the spray device can also promote the chemical reaction between the glass surface and the cerium oxide abrasive, because the moisture provided by the spray device can participate in the chemical reaction and improve the effect of the mirror treatment.

In some specific embodiments, the temperature of glass surface in the whole rough polishing process is controlled at less than 40°C, less than 38°C, less than 35°C, less than 30°C or less than 27°C; in the whole mirror treatment process, the temperature of glass surface is controlled at less than 30°C, less than 28°C, less than 25°C, less than 20°C or less than 18°C. In practice, if the temperature of glass surface exceeds 40°C, it is easy to damage the screen or internal circuit of electronic products.

In the present invention, the precise control device for grinding disc path and the precise control device for the consistency of contact point (surface) between the grinding disc and the glass surface may be implemented by a robot arm such as a 6-axis robot arm. Through the 6-axis robot arm, any path control of the contact between the glass surface and the grinding plate and the consistency of the contact points (surfaces) between them can be realized. Generally, electronic products have different types and specifications; according to the size, shape, front and back of the glass surface, different rough polishing or mirror treatment paths can be planned by computer system. In principle, the path planning makes each glass surface area and the contact surface of the grinding plate keep uniform, symmetrical and consistent.

In the specific embodiment, the electronic product can be grasped and released by a robot arm. The robot arm can ensure the seamless fit between the manipulator and electronic products. In the preferred embodiment, the edge of the manipulator is provided with an elastic layer, so that the glass surface will not displace or fall off from the robot arm during the force process of the rough polishing / mirror treatment.

In another specific embodiment, the electronic product can be grasped and released through a vacuum suction cup and a vacuum generator. The vacuum suction cup can include a plurality of adsorption sites, and the position of the adsorption sites is adjustable, so as to ensure that each area of the glass surface has a suitable supporting force during the coarse polishing / mirror treatment process.

In the invention, the grinding disc comprises a circular disc holder and one or more abrasive discs. In some embodiments, abrasive discs of different diameters can be pasted on the same circular disc holder. It is preferred that the adjustment time of polishing path in different processes can be reduced by ensuring the same sticking concentricity of each abrasive sheet.

To assist in controlling position, action or both, the device of the invention can also include a fixture or a model tool for placing and grasping different electronic products. By using the fixture, the consistency of taking out and placing parts of the robot arm can be ensured, and the processing stability of each rough polishing / mirror treatment process can be ensured.

For the need of automation, the equipment of the invention can also include various main control devices for realizing the automatic control of the complete rough polishing / mirror treatment process. Generally, the core components of the main control device include PLC (for example, R series products purchased from Mitsubishi, Japan), servo motor, robot arm controller, etc.

In the embodiment of the invention, based on the pressure measured by the pressure measuring device, the precise control device for pressure increase and decrease controls the pressure of polishing treatment in step (1) at 0.8-4N, and the polishing pressure in step (2) is controlled at 0.4-2N.

In the embodiment of the invention, based on the temperature measured by the temperature measuring device, the precise control device of the surface temperature controls the temperature of the polished substrate surface in step (1) to be less than 40°C, and the temperature of the polished substrate surface in step (2) is controlled to be less than 25°C.

In the present invention, a process for surface scratch repair using the apparatus comprises:
(1) Start rough polishing process
   - According to the type or model of electronic products, the robot arm automatically grabs or absorbs the electronic products to be roughly polished and moves to the position to be processed
   - Start the grinding plate according to the set speed and direction.
   - According to the preset rough polishing path, the robot arm contacts with the grinding plate surface.
   - According to the difference between the preset pressure value and the real-time pressure detection value, the pressure control device automatically adjusts the pressure, so that the difference between the preset pressure value and the real-time pressure detection value is as small as possible in the whole rough polishing process; the principle and detailed process of the pressure control described in the invention can be well known by technical personnel in this filed, it can also refer to CN106553126B published by the inventor in China Patent Website, in which the publication of the Chinese patent is incorporated in this paper by full text reference.
   - Automatic control of spray device according to real-time temperature detection value and / or programmed setting value of glass surface.
   - When the robot arm completes a complete path and preset cycle times according to the preset rough polishing path, the robot arm moves to the fixture box, releases the gripper or closes the vacuum sucker, and automatically puts the electronic products after rough polishing into the fixture box.
(2) Start the mirror treatment process
   - According to the type or model of electronic products, the robot arm automatically grabs or absorbs electronic products to be processed with mirror treatment.
   - Start the grinding plate according to the set speed and direction
   - According to the preset path of mirror treatment, the manipulator is in contact with the grinding plate surface.
   - According to the difference between the preset pressure value and the real-time pressure detection value, the pressure control device automatically adjusts the pressure to make the difference between the preset pressure value and the real-time pressure detection value as small as possible in the whole process of mirror treatment.
   - Automatic control of spray device according to real-time temperature detection value and / or programmed setting value of glass surface.
   - When the robot arm completes a complete path and preset cycle times according to the preset mirror treatment path, the robot arm moves to the fixture box, releases the gripper or closes the vacuum sucker, and automatically puts the electronic products after mirror treatment into the fixture box.

### Example 1

The equipment for repairing the surface scratch of the mobile phone is used to repair the glass surface of the mobile phone according to the following technological conditions.
1. Rough polishing process conditions
   (1) ABRALON J3500 abrasive plate was used, in which the abrasive particle size was 30µm.
   (2) The abrasive plate is installed on a disc holder with a diameter of 6 inches.
   (3) The rotating speed of the grinding disc is 3500 rpm, and the direction is clockwise (forward direction).
   (4) The pressure value when the grinding disc contacts with the glass surface is 1N.
   (5) Rough polishing time: 3 minutes.
   (6) Rough polishing path: along the periphery, continuously reducing the radius to the middle.
   (7) The number of cycles is 8.
2. Rough polishing process
   (1) The manipulator automatically moves to the position of the fixture box, automatically grabs the mobile phone to be roughly polished and moves to the position to be processed.
   (2) Start the grinding plate according to the rotation speed and direction of the grinding disc.
   (3) According to the rough polishing path, the robot arm is in contact with the grinding plate surface.
   (4) Based on the set pressure value, the pressure is automatically adjusted so that the preset pressure value is equal to the real-time pressure detection value in the whole rough polishing process (or the difference between the two is less than 0.05N).
   (5) Automatic control spray device controls the mobile phone glass surface temperature no more than 40°C.
   (6) When the robot arm circulates 8 times according to the preset rough polishing path, the robot arm moves to the fixture box, releases the gripper or closes the vacuum sucker, and the electronic products after rough polishing are automatically put into the fixture box.
3. Mirror treatment process conditions
   (1) 568XA abrasive plate was used.
   (2) The abrasive plate is installed on a disc holder with a diameter of 5 inches.
   (3) The speed of the grinding disc is 1500 rpm, and the direction is counterclockwise (reverse).
   (4) The pressure value when the grinding disc contacts with the glass surface is 0.8N.
   (5) Mirror treatment time: 3 minutes.
   (6) Mirror treatment path: along the periphery, continuously reducing the radius to the middle.
   (7) The number of cycles is 4.
4. Mirror treatment process
   (1) The robot arm automatically moves to the position of the fixture box, automatically grabs the mobile phone waiting for mirror treatment and moves to the position to be processed.
   (2) Start the grinding plate according to the rotation speed and direction of the grinding disc.
   (3) According to the path of the mirror treatment, the robot arm is in motion contact with the grinding plate surface.
   (4) Based on the set pressure value, the pressure is automatically adjusted so that the preset pressure value is equal to the real-time pressure detection value in the whole mirror treatment process (or the difference between the two is less than 0.03N).
   (5) Automatic control spray device controls the mobile phone glass surface temperature no more than 25°C.
   (6) When the robot arm circulates 4 times according to the preset mirror treatment path, the manipulator moves to the fixture box, releases the gripper or closes the vacuum sucker, and automatically puts the electronic products after mirror treatment into the fixture box.

In example 1, the surface of the mobile phone glass is smooth after rough polishing and mirror treatment, and there is no scratch visible to the naked eye.

In embodiment 1, the glass surface of the mobile phone is smooth and free from visible scratches after rough polishing and mirror polishing.

### Example 2

Except that ABRALON J3600 is used in the rough polishing process, the rotating speed of the grinding disc is 4000 rpm, and the pressure when the grinding disc contacts the glass surface is 3N, the rough polishing and mirror polishing processes are carried out in the same way as the first embodiment.

In embodiment 2, the glass surface of the mobile phone is smooth and free from visible scratches after rough polishing and mirror polishing.

### Example 3

Apart from the fixed position of the mobile phone, the mechanical arm grabs the grinding plate for rough polishing and mirror polishing processes, the rough polishing and mirror treatment processes are carried out in the same way as the first embodiment.

In embodiment 3, the glass surface of the mobile phone is smooth and free from visible scratches after rough polishing and mirror polishing.

### Example 4

In addition to using CNC to replace the mechanical arm and the grinding plate to replace the cutting knife, the rough polishing and mirror treatment processes are carried out in the same way as the first embodiment.

In embodiment 3, the glass surface of the mobile phone is smooth and free from visible scratches after rough polishing and mirror polishing.

In example 4, the surface of the mobile phone glass is smooth after rough polishing and mirror polishing, and there is no scratch visible to the naked eye.

In embodiment 4, the glass surface of the mobile phone is smooth and free from visible scratches after rough polishing and mirror polishing.

Although the present invention has been described in combination with specific embodiments, it can be understood by those skilled technicians in this field, and many modifications and variations can be made to the invention. Therefore, it should be recognized that the intention of the claims is to cover all these modifications and variations within the true concept and scope of the present invention.

## Claims

1. A method for repairing a surface scratch, the method comprising the following steps:
(1) an abrasive is used to polish a surface of a substrate without the presence of a polishing liquid; a polishing treatment is carried out under the condition that the contact pressure between the abrasive and the substrate surface is 0.8-4N and the substrate surface temperature is less than 40°C;
(2) the substrate surface after step (1) is processed with mirror treatment with abrasive without the presence of polishing liquid, wherein the polishing is carried out under a pressure of 0.4-2N contact pressure between the abrasive and the substrate, and a temperature of the substrate surface less than 25°C.

2. The method according to claim 1, wherein the abrasive material in step (1) is selected from diamond, silicon carbide or their combination.

3. The method according to claim 1, wherein the abrasive material in step (2) comprises cerium oxide.

4. The method according to claim 1, wherein in step (1), the particle size of the abrasive is 18-40µm; and in step (2), the structure of the abrasive is pyramid-shaped.

5. The method according to claim 1, wherein, if there are still surface scratches after step (1) and step (2), then repeat steps (1) and step (2), provided that the grinding times of steps (1) and (2) at the same position are reduced.

6. The method according to claim 1, wherein the abrasive is polished or is processed with mirror treatment in a forward reverse symmetrical manner.

7. The method according to claim 1, wherein the polishing treatment in step (1) is carried out at a grinding wheel speed of 3000-4000 rpm; and the mirror treatment in step (2) is carried out at a grinding wheel speed of 800-2500 rpm.

8. An apparatus for performing the method of any one of claims 1-7, the apparatus comprising:
(a) a pressure measuring device for measuring the contact pressure between abrasive and glass;
(b) a precise control device for pressure increase and decrease;
(c) a speed control device of grinding plate;
(d) a surface temperature measuring device;
(e) an accurate control device of surface temperature;
(f) a precise control device of grinding disk path;
(g) a precise control device of contact point (surface) consistency between grinding plate and glass surface.

9. The apparatus according to claim 8, wherein, based on the pressure measured by the pressure measuring device, the precision control device for pressure increase and decrease controls the pressure of polishing treatment in step (1) at 0.8-4N, and the pressure of mirror treatment in step (2) is controlled at 0.4-2N.

10. The apparatus according to claim 8, wherein, based on the temperature measured by the temperature measuring device, the precision control device of the surface temperature controls the temperature of the polished substrate surface in step (1) to less than 40°C, and controls the temperature of mirror treatment of the substrate surface in step (2) to be less than 25°C.
